# EUROPEAN PATENT SPECIFICATION

(11) **EP 2 901 103 B1**
(45) Date of publication and mention of the grant of the patent: **26.06.2019**
(21) Application number: 13766350.6
(22) Date of filing: 25.09.2013
(51) Int. Cl.: G01C 5/00, G01C 11/02, G01C 11/06

(54) **COMPUTING APPARATUS AND METHOD**
BERECHNUNGSVORRICHTUNG UND -VERFAHREN
APPAREIL ET PROCÉDÉ DE CALCUL

(30) Priority: 25.09.2012 GB 201217104
(43) Date of publication of application: 05.08.2015
(73) Proprietor: Jaguar Land Rover Limited, Coventry, Warwickshire CV3 4LF (GB)
(72) Inventor: WIDDOWSON, Paul, Whitley Coventry Warwickshire CV3 4LF (GB); GASZCZAK, Anna, Whitley Coventry Warwickshire CV3 4LF (GB)
(74) Representative: Holmes, Matthew William
(86) International application number: PCT/EP2013/069978
(87) International publication number: WO 2014/048995

(56) References cited:
- US-A1- 2005 177 350
- US-A1- 2008 095 404

## Description

### FIELD OF THE INVENTION

The present invention relates to an apparatus for measuring a height of a roof load of a vehicle. Aspects of the invention relate to an apparatus, to a method to a code, to a storage medium and to a vehicle.

### BACKGROUND

Collision of vehicles with overhead obstacles is a known problem particularly for high sided vehicles such as trucks. In order to reduce a risk of collision it is known to attach a radar device to the vehicle. The radar device scans an environment ahead of the vehicle for potential collision hazards. If such a hazard is detected the device sounds an alert to a driver of the vehicle.

It is desirable to provide a solution to this problem that is convenient for use by motor vehicle drivers such as private cars or automobiles that may carry different roof loads at different times.

US 2008/0095404 A1 describes a method for automatically determining the volume of a vehicle based on images.

US 2005/177350 A1 describes a three-dimensional modelling method for generating three-dimensional electronic data of a building structure for an electronic map.

### STATEMENT OF THE INVENTION

Embodiments of the invention may be understood with reference to the appended claims.

Aspects of the present invention provide an apparatus as defined in claim 1, a vehicle as defined in claim 10, a method as defined in claim 11, a computer program code as defined in claim 12, and a computer readable storage medium as defined in claim 13.

In an aspect of the invention for which protection is sought there is provided an apparatus for determining a height of a roof load of a vehicle, the apparatus being operable to:
display a captured image of at least a portion of the vehicle and roof load on display means of the apparatus;
superimpose a vehicle overlay on the image, the vehicle overlay comprising an image representing a virtual model of the vehicle from a first perspective, wherein at least a first dimension of the vehicle overlay corresponds to a known dimension of the vehicle; and
allow a user to manipulate the vehicle overlay to comprise an image that represents the virtual model of the vehicle from a second perspective, thereby to obtain a prescribed correspondence between at least the first dimension of the overlay and the captured image,
wherein the apparatus is further operable to calculate a height of the roof load and to provide an output corresponding to the calculated height.

Embodiments of the present invention have the advantage that a height of a roof load may be determined with accuracy in a convenient manner. It is to be understood that the ability to determine accurately a roof load height may assist a vehicle operator in reducing a risk of collision of the vehicle with an overhead obstacle such as a bridge or other structure. Since the first dimension of the overlay corresponds to a known dimension of the vehicle, other dimensions within the captured image can be calculated. It may be that the vehicle overlay corresponds a plurality of dimensions which correspond to known dimensions of the vehicle. The apparatus may be operable to allow a user to manipulate the vehicle overlay thereby to obtain a prescribed correspondence between some or all of the dimensions of the overlay and the at least a portion of the vehicle.

It is to be understood that the output corresponding to the calculated height may be in the form of a visual output, an audible output, or in the form of a signal. For example the apparatus may provide the output in the form of a digital transmission via a wired or wireless link. The output may be in the form of a data stream, a data packet or any other suitable signal.

According to the invention, the apparatus is operable to allow the user to manipulate the vehicle overlay. The overlay may be manipulated by translation, expansion and compression thereof in at least two non-parallel directions.

Further advantageously the apparatus may be operable to display a predetermined vehicle overlay corresponding to the make and model of the vehicle displayed in the image.

The apparatus may be operable to determine the make and model of the vehicle by reference to one selected from amongst make and model data input by a user; a unique vehicle identifier input by a user such as a license plate number or vehicle identification number (VIN); and a unique vehicle identifier determined by the apparatus from an image by optical character recognition.

Advantageously the vehicle overlay may comprise an image or representation of at least a portion of the vehicle, optionally a wire frame image.

Advantageously the apparatus may be operable to allow the user to provide an indication of a location of an upper boundary of the roof load on the displayed image by requesting the user to position a roof load overlay over the portion of the image corresponding to the roof load.

The roof load overlay may comprise a wire frame image.

The apparatus may be operable automatically to detect a location of the roof load from the captured image. The apparatus may be operable automatically to detect the location of an upper boundary of the roof load on the displayed image, for example by optical analysis of the image.

Optionally the apparatus is operable to allow the user to provide an indication of a location of an upper boundary of the roof load on the displayed image by requesting the user to confirm that the location of the roof load as determined automatically by the apparatus is correct.

Advantageously the apparatus may be operable to request a user to switch on one or more illumination means of the vehicle before an image of the vehicle is captured.

This feature has the advantage that contrast between features of the vehicle may be enhanced thereby to facilitate alignment of the overlay.

Further advantageously the apparatus may be operable to request a user to switch on one or more illumination means of the vehicle when it is determined that a contrast between features of a captured image is below a threshold level.

The apparatus may be operable to request a user to switch on one or more illumination means of the vehicle when it is determined that one or more features of a vehicle are not detectable in a captured image.

The apparatus may further comprise means for capturing the image of a vehicle.

The apparatus may comprise means for communication with computing means of a vehicle thereby to provide data corresponding to a height of a roof load of the vehicle.

The apparatus may be operable to provide data corresponding to a height of a roof load of the vehicle by one selected from amongst a wireless link, optionally a short range radio connection such as Bluetooth (RTM), a short message service (SMS) communication, an email and a wired link.

In a further aspect of the invention for which protection is sought there is provided a vehicle having computing means that communicate with an apparatus according to any preceding aspect of the invention, the vehicle being operable to receive data corresponding to a height of a roof load of the vehicle from the apparatus.

The vehicle may be operable to provide an indication to a user of the height of the roof load responsive to the data received from the apparatus.

Advantageously the vehicle may be operable to provide an indication whether a roof load has a height exceeding one or more prescribed values.

The vehicle may be operable to communicate an actual height of the roof load to a driver by one selected from amongst a visual indication and an audible indication.

In a further aspect of the invention for which protection is sought there is provided a method of determining a height of a roof load of a vehicle comprising:
receiving and displaying a captured image of at least a portion of the vehicle on display means of a computing apparatus;
superimposing a vehicle overlay on the image, the vehicle overlay comprising an image representing a virtual model of the vehicle from a first perspective, wherein at least a first dimension of the vehicle overlay corresponds to a known dimension of the vehicle; and
receiving an input from a user and changing an appearance of the vehicle overlay responsive to the input from the user whereby the user manipulates the overlay to comprise an image that represents the virtual model of the vehicle from a second perspective, to obtain a prescribed correspondence between at least the first dimension of the vehicle overlay and the captured image,
the method further comprising calculating a height of the roof load and providing an output corresponding to the calculated height.

In an aspect of the invention for which protection is sought there is provided computer program code arranged to implement a method according to the preceding aspect when executed by a computing apparatus.

In one aspect of the invention for which protection is sought there is provided a computer readable storage medium having stored therein computer program code by means of which a computing apparatus may implement the method of an aspect of the invention.

Features described in connection with one embodiment are applicable to all embodiments, unless such features are incompatible.

### BRIEF DESCRIPTION OF THE DRAWINGS

One or more embodiments of the invention will now be described, by way of example only, with reference to the accompanying figures in which:

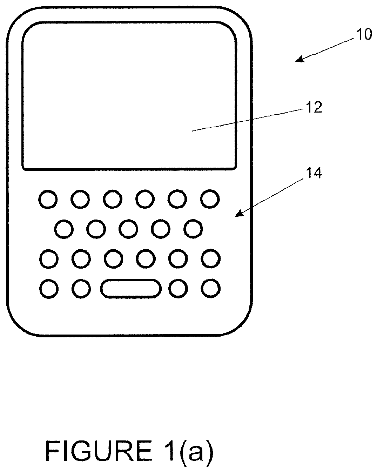

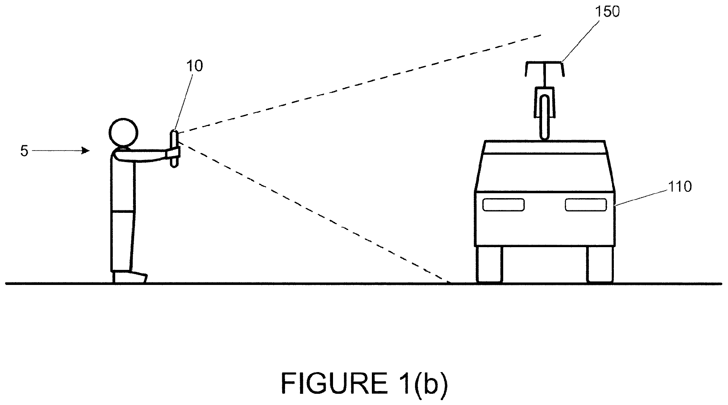

FIGURE 1 shows (a) a mobile smartphone device running a software application according to an embodiment of the present invention; and (b) a scenario in which a user employs a smartphone according to an embodiment of the present invention to capture an image of a vehicle having a roof load;

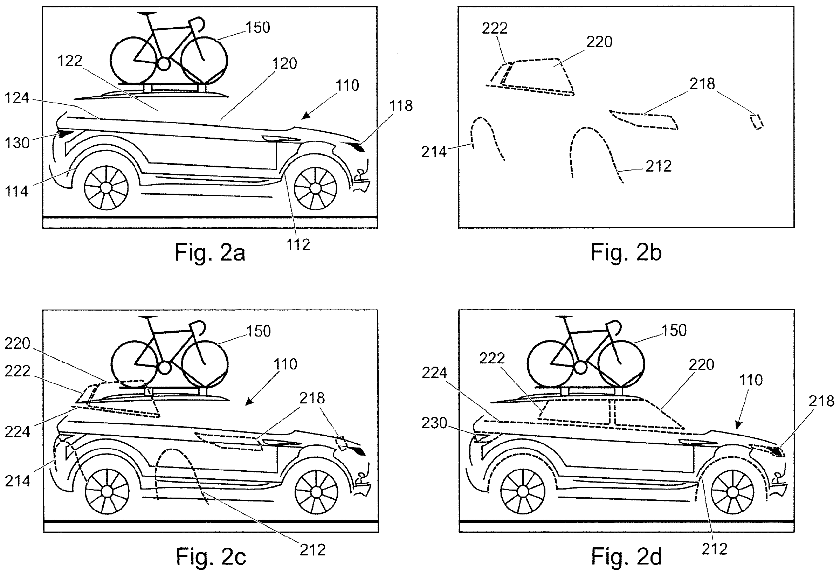

FIGURE 2 shows (a) an example of an image of a vehicle with roof load captured by the apparatus of FIG. 1; (b) an image of a vehicle overlay having shape elements corresponding to prominent features of the particular make and model of the vehicle shown in (a); (c) a screenshot from the apparatus of FIG. 1 showing the vehicle overlay of (b) superimposed on the image of (a) prior to manipulation by the user; and (d) a screenshot from the apparatus of FIG, 1 showing the vehicle overlay of (b) superimposed on the image of (a) after manipulation by the user to match the corresponding features of the vehicle; and

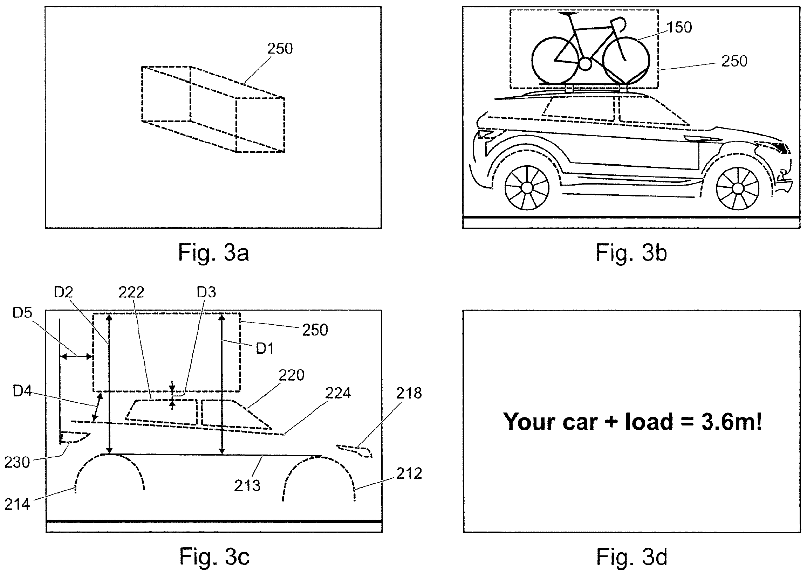

FIGURE 3 shows (a) a load definition overlay in the form of a wire frame representation of a rectangular box; (b) the load definition overlay superimposed on the image of FIG. 1(a) following manipulation by the user to enclose the roof load of the vehicle; (c) a screenshot from the apparatus showing only the vehicle and roof load overlays; and (d) a screenshot from the apparatus showing the result of the determination of vehicle roof load height.

### DETAILED DESCRIPTION

In one embodiment of the invention a mobile telecommunications apparatus 10 is provided in the form of a smart phone device 10 shown in FIG. 1(a) operable to run user downloadable software applications (or 'apps'). The device 10 is loaded with a software application that is configured to control the device 10 to measure a height of a roof load 150 of a motor vehicle 110 (FIG. 1(b)). The software application is configured to determine the height based on an image of the vehicle 110 and roof load 150 provided to it. In the embodiment of FIG. 1(a) the application is operable to employ an image captured by the smart phone device 10 itself. In some alternative embodiments the apparatus may be arranged to receive from an external source an image of a vehicle for processing, for example by means of a telecommunications network, a removable data storage device or any other suitable means.

FIG. 1(b) shows a scenario in which user 5 controls the device 10 to capture an image of the vehicle 110 with roof load 150 for use by the software application. FIG. 2(a) shows an example of an image of a vehicle 110 with roof load 150 as captured by the device 10 and displayed on a screen thereof.

After capturing an image of the vehicle 110 with roof load 150 the device 10 is configured to request a user to input data corresponding to a make and model of the vehicle 110. Responsive to this data the device 10 displays a vehicle overlay 210 on a screen 12 of the device 10 corresponding to the selected make and model of the vehicle 110. In the present embodiment the vehicle overlay 210 is in the form of a wire frame image representing a virtual model of the selected vehicle. A screen shot taken from the display 12 of the device 10 at this stage is shown in FIG. 2(b).

In the present embodiment illustrated in FIG. 2 the vehicle overlay 210 includes a representation of a select number of prominent features of the selected vehicle including an outline of front and rear wheel arches 212, 214, front and rear lighting clusters 218, 230, front and rear door window panels 220, 222 and door window seal stripes 224.

The device 10 is then configured to superimpose the vehicle overlay 210 on the image of the vehicle 110 that was captured by the user. A screenshot taken from the display 12 of the device 10 at this stage is shown in FIG. 2(c).

The device 10 is configured to allow a user to input commands to the device 10 to rotate, resize and translate the vehicle overlay 210 until the features of the vehicle 110 provided by the overlay 210 are directly superimposed on the corresponding features of the vehicle 110 in the captured image. FIG. 2(d) is a screenshot taken from the device 10 following manipulation of the overlay 210 in this manner.

In some embodiments the device 10 has a touch-sensitive display (touchscreen) 12 and is configured to allow manipulation of the overlay 210 to be performed by prescribed gestures input to the device 10 via the touchscreen. In addition or instead, in some embodiments the device 10 may be configured to allow the user to input commands to manipulate the overlay 210 by means of a keypad 14 of the device 10. Other arrangements are also useful.

After performing the vehicle overlay 210 alignment procedure described above the user is presented with a roof load overlay 250 in the form of a wire frame image of a box. The user is requested to manipulate the image so as to enclose within the box of the roof load overlay 250 the portion of the captured image containing the roof load 150. FIG. 3(a) is a screenshot taken from the device 10 when displaying the roof load overlay 250 only.

FIG. 3(b) is a screenshot taken from the device 10 showing the captured image with the vehicle overlay 210 and roof load overlay 250 following manipulation by the user of the roof load overlay 250. It can be seen that the portion of the captured image corresponding to the roof load 150 is enclosed within the roof load overlay 250.

The user is then requested by the device 10 to confirm that they are satisfied that the vehicle overlay 210 and roof load overlay 250 correctly overlie the corresponding features of the captured image. Once this confirmation is provided the device 10 is configured automatically to determine the distance between prescribed reference points of the vehicle 110 and corresponding prescribed reference points of the roof load overlay 250 as if the roof load overlay 250 were a physical object on the vehicle. In the present embodiment the distances D1, D2, D3, D4, and D5 of FIG. 3(c) are measured automatically by the device 10 with respect to the actual vehicle by means of standard trigonometry. It is to be understood that the device 10 is provided with data corresponding to the actual size and relative heights above ground of each of the features of the vehicle overlay with respect to an actual vehicle. The device 10 is configured to determine the heights D1 and D2 of the upper limit of the roof load 150 above the window strips 124 at prescribed positions.

Dimension D3 corresponds to a vertical distance between an upper edge of the rear door window 122 and a lower edge of the wire frame box image of the roof load overlay 250 at a prescribed position of the door window 122. Dimension D4 corresponds to a distance between the door seal strip 124 and the lower edge of the wire frame box image of the roof load overlay 250 at a prescribed position whilst dimension D5 corresponds to a horizontal distance between a rearmost edge of the rear lighting cluster 130 and the rearmost edge of the wire frame box image of the roof load overlay 250.

The device 10 therefore determines an absolute height above ground of an upper limit of the roof load 150 by determining the value of distances D1 and D2 and adding to each distance a height above ground of the waistline of the vehicle at the prescribed positions. The value of the height above ground is output as an absolute height measurement as illustrated in the screenshot shown in FIG. 3(d).

It will be readily apparent to the skilled person that in some embodiments the device 10 may be configured to determine the heights D1 and D2 of the upper limit of the roof load 150 with respect to alternative or additional features of the vehicle 110 at prescribed positions, for example above the door window stripe 124 of the vehicle at the prescribed positions. In this case, the device 10 therefore determines an absolute height above ground of an upper limit of the roof load 150 by determining the value of distances D1 and D2 and adding to each distance a height above ground of the door window stripe 124 of the vehicle at the prescribed positions.

It is to be understood that in some embodiments the device 10 may compare dimensions of features of the overlays 210, 250 in a captured image along respective axes, for example along respective orthogonal axes such as respective horizontal and vertical axes. The device 10 may for example compare a horizontal length and vertical height of a given feature such as a door window 120, 122 in order to determine a tilt of the device 10 about a horizontal axis. The device 10 may subsequently employ this information to generate a 3D model of the size and position of the roof load 150 (as defined by the roof load overlay 250) with respect to the vehicle 100 in order to determine the absolute height above ground of an upper limit of the roof load 150.

In some embodiments the apparatus 10 may be configured to request a user to switch on one or more illumination lamps of the vehicle 110 such as one or more interior or exterior lamps. Thus if the apparatus 10 determines that the contrast between two or more features of the vehicle 110 is inadequate, or that one or more features are not detectable for example due to low lighting conditions, the apparatus 10 may request the one or more lamps to be illuminated. In some embodiments the particular vehicle overlay displayed may be responsive to a determination whether or not a user has switched on one or more lamps. For example, in the case where a plurality of overlays are available for a particular vehicle and one or more of the overlays includes a lamp or lighting cluster, the apparatus 10 may be operable to select such an overlay. Similarly, if an outline of one or more windows may be enhanced by switching on interior illumination a user may be requested to switch on such illumination and be provided with an overlay having one or more features corresponding to one or more windows of the vehicle. The apparatus 10 may be operable to select such an overlay automatically or in response to a user input.

In the embodiment described above, the user provides an indication of the location of the roof load by manipulating a roof load overlay 250. In an alternative embodiment, the device 10 is arranged to automatically detect the height of the load by analysing the captured image.

## Claims

1. An apparatus (10) for determining a height of a roof load (150) of a vehicle (110), the apparatus being operable to:
display a captured image of at least a portion of the vehicle (110) and roof load (150) on display means (12) of the apparatus;
superimpose a vehicle overlay (210) on the image, the vehicle overlay comprising an image representing a virtual model of the vehicle from a first perspective, wherein at least a first dimension of the vehicle overlay corresponds to a known dimension of the vehicle (110); and
allow a user (5) to manipulate the vehicle overlay (210) to comprise an image that represents the virtual model of the vehicle from a second perspective, thereby to obtain a prescribed correspondence between at least the first dimension of the overlay and the captured image;
wherein the apparatus (10) is further operable to calculate a height of the roof load (150) and to provide an output corresponding to the calculated height.

2. An apparatus (10) as claimed in claim 1 wherein the apparatus is operable to allow the user (5) to manipulate the vehicle overlay (210) by translation, expansion and compression thereof in at least two non-parallel directions.

3. An apparatus (10) as claimed in claim 1 or claim 2 wherein the apparatus is operable to display a predetermined vehicle overlay (210) corresponding to the make and model of the vehicle displayed in the image.

4. An apparatus (10) as claimed in claim 3 operable to determine the make and model of the vehicle (110) by reference to one selected from amongst make and model data input by a user (5); a unique vehicle identifier input by a user such as a license plate number or vehicle identification number (VIN); and a unique vehicle identifier determined by the apparatus from an image by optical character recognition.

5. An apparatus (10) as claimed in any preceding claim wherein the vehicle overlay (210) comprises an image of at least a portion of the vehicle, optionally a wire frame image.

6. An apparatus (10) as claimed in any preceding claim operable to allow the user (5) to provide an indication of a location of an upper boundary of the roof load (150) on the displayed image by requesting the user to position a roof load overlay (250) over the portion of the image corresponding to the roof load.

7. An apparatus (10) as claimed in claim 6 wherein the roof load overlay (250) comprises a wire frame image.

8. An apparatus (10) as claimed in any preceding claim wherein the apparatus is operable automatically to detect a location of the roof load (150) from the captured image and/or
wherein the apparatus is operable to allow the user to provide an indication of a location of an upper boundary of the roof load (150) on the displayed image.

9. An apparatus (10) as claimed in any preceding claim operable to request a user (5) to switch on one or more illumination means of the vehicle.

10. A vehicle (110) having computing means that communicate with an apparatus (10) according to any preceding claim, the vehicle being operable to receive data corresponding to a height of a roof load (150) of the vehicle from the apparatus.

11. A method of determining a height of a roof load (150) of a vehicle (110) comprising:
receiving and displaying a captured image of at least a portion of the vehicle (110) on display means (12) of a computing apparatus (10);
superimposing a vehicle overlay (210) on the image, the vehicle overlay comprising an image representing a virtual model of the vehicle from a first perspective, wherein at least a first dimension of the vehicle overlay corresponds to a known dimension of the vehicle (110); and
receiving an input from a user (5) and changing an appearance of the vehicle overlay (210) responsive to the input from the user whereby the user manipulates the overlay to comprise an image that represents the virtual model of the vehicle from a second perspective, to obtain a prescribed correspondence between at least the first dimension of the vehicle overlay and the captured image,
the method further comprising calculating a height of the roof load (150) and providing an output corresponding to the calculated height.

12. Computer program code arranged to implement the method of claim 11 when executed by a computing apparatus (10).

13. A computer readable storage medium having stored therein computer program code by means of which a computing apparatus (10) may implement the method of claim 11.

## Patentansprüche

1. Vorrichtung (10) zum Bestimmen einer Höhe einer Dachladung (150) eines Fahrzeugs (110), wobei die Vorrichtung zu Folgendem betriebsfähig ist:
Anzeigen eines aufgenommenen Bildes von wenigstens einem Abschnitt des Fahrzeugs (110) und der Dachladung (150) auf einem Anzeigemittel (12) der Vorrichtung;
Überlagern des Bildes mit einer Fahrzeugeinblendung (210), wobei die Fahrzeugeinblendung ein Bild umfasst, das ein virtuelles Modell des Fahrzeugs aus einer ersten Perspektive darstellt, wobei wenigstens eine erste Abmessung der Fahrzeugeinblendung einer bekannten Abmessung des Fahrzeugs (110) entspricht; und
Ermöglichen, dass ein Benutzer (5) die Fahrzeugeinblendung (210) manipuliert, um ein Bild zu umfassen, das das virtuelle Modell des Fahrzeugs aus einer zweiten Perspektive darstellt, um dadurch eine vorgeschriebene Entsprechung zwischen wenigstens der ersten Abmessung der Einblendung und dem erfassten Bild zu erhalten;
wobei die Vorrichtung (10) ferner betriebsfähig ist, um eine Höhe der Dachladung (150) zu berechnen und eine Ausgabe bereitzustellen, die der berechneten Höhe entspricht.

2. Vorrichtung (10) nach Anspruch 1, wobei die Vorrichtung betriebsfähig ist, dem Benutzer (5) zu ermöglichen, die Fahrzeugeinblendung (210) durch Verschiebung, Expansion und Kompression davon in wenigstens zwei nicht parallelen Richtungen zu manipulieren.

3. Vorrichtung (10) nach Anspruch 1 oder 2, wobei die Vorrichtung betriebsfähig ist, um eine vorgegebene Fahrzeugeinblendung (210) anzuzeigen, die der Fahrzeugmarke und dem -modell in dem angezeigten Bild entspricht.

4. Vorrichtung (10) nach Anspruch 3, die betriebsfähig ist, um die Marke und das Modell des Fahrzeugs (110) durch Bezugnahme auf eines, das aus Folgendem ausgewählt ist, zu bestimmen: von einem Benutzer (5) eingegebene Marken- und Modelldaten; einer von einem Benutzer eingegebenen eindeutigen Fahrzeugkennung, beispielsweise eine Kfz-Kennzeichen- oder eine Fahrzeug-Identifizierungsnummer (FIN); und einer eindeutigen Fahrzeugkennung, die von der Vorrichtung von einem Bild durch optische Zeichenerkennung bestimmt wird.

5. Vorrichtung (10) nach einem der vorhergehenden Ansprüche, wobei die Fahrzeugeinblendung (210) ein Bild von wenigstens einem Abschnitt des Fahrzeugs, optional ein Drahtmodellbild, umfasst.

6. Vorrichtung (10) nach einem der vorhergehenden Ansprüche, die betriebsfähig ist, dem Benutzer (5) zu ermöglichen, eine Angabe einer Position einer oberen Grenze der Dachladung (150) auf dem angezeigten Bild bereitzustellen, indem der Benutzer aufgefordert wird, eine Dachladungseinblendung (250) über dem der Dachladung entsprechenden Abschnitt des Bildes zu positionieren.

7. Vorrichtung (10) nach Anspruch 6, wobei die Dachladungseinblendung (250) ein Drahtmodellbild umfasst.

8. Vorrichtung (10) nach einem der vorhergehenden Ansprüche, wobei die Vorrichtung automatisch betriebsfähig ist, um eine Position der Dachladung (150) von dem aufgenommenen Bild zu erkennen, und/oder wobei die Vorrichtung betriebsfähig ist, um dem Benutzer zu ermöglichen, eine Angabe einer Position einer oberen Grenze der Dachladung (150) auf dem angezeigten Bild bereitzustellen.

9. Vorrichtung (10) nach einem der vorhergehenden Ansprüche, die betriebsfähig ist, um einen Benutzer (5) aufzufordern, ein oder mehrere Beleuchtungsmittel des Fahrzeugs einzuschalten.

10. Fahrzeug (110) mit Rechenmitteln, die mit einer Vorrichtung (10) nach einem der vorhergehenden Ansprüche kommunizieren, wobei das Fahrzeug betriebsfähig ist, Daten, die einer Höhe von einer Dachladung (150) des Fahrzeugs entsprechen, von der Vorrichtung zu empfangen.

11. Verfahren zum Bestimmen einer Höhe einer Dachladung (150) eines Fahrzeugs (110), Folgendes umfassend: Empfangen und Anzeigen eines aufgenommenen Bildes von wenigstens einem Abschnitt des Fahrzeugs (110) auf einem Anzeigemittel (12) einer Rechenvorrichtung (10);
Überlagern des Bildes mit einer Fahrzeugeinblendung (210), wobei die Fahrzeugeinblendung ein Bild umfasst, das ein virtuelles Modell des Fahrzeugs aus einer ersten Perspektive darstellt, wobei wenigstens eine erste Abmessung der Fahrzeugeinblendung einer bekannten Abmessung des Fahrzeugs (110) entspricht; und
Empfangen einer Eingabe von einem Benutzer (5) und Ändern eines Erscheinungsbildes der Fahrzeugeinblendung (210) als Reaktion auf die Eingabe von dem Benutzer, wodurch der Benutzer die Einblendung manipuliert, sodass sie ein Bild umfasst, das das virtuelle Modell des Fahrzeugs aus einer zweiten Perspektive darstellt, um eine vorgeschriebene Entsprechung zwischen wenigstens der ersten Abmessung der Fahrzeugeinblendung und dem erfassten Bild zu erhalten, wobei das Verfahren ferner das Berechnen einer Höhe der Dachladung (150) und das Bereitstellen einer Ausgabe, die der berechneten Höhe entspricht, umfasst.

12. Computerprogrammcode, der angeordnet ist, um das Verfahren nach Anspruch 11 zu implementieren, wenn er von einer Rechenvorrichtung (10) ausgeführt wird.

13. Computerlesbares Speichermedium mit einem darin gespeicherten Computerprogrammcode, durch den eine Rechenvorrichtung (10) das Verfahren nach Anspruch 11 implementieren kann

## Revendications

1. Appareil (10) destiné à déterminer une hauteur d'une charge de toit (150) d'un véhicule (110), l'appareil permettant les actions suivantes :
afficher une image capturée d'au moins une partie du véhicule (110) et de la charge de toit (150) sur un moyen d'affichage (12) de l'appareil ;
positionner une superposition du véhicule (210) sur l'image, la superposition du véhicule comprenant une image représentant un modèle virtuel du véhicule à partir d'un premier point de vue, au moins une première dimension de la superposition du véhicule correspondant à une dimension connue du véhicule (110) ; et
permettre à un utilisateur (5) de manipuler la superposition du véhicule (210) pour composer une image qui représente le modèle virtuel du véhicule à partir d'un second point de vue, afin d'obtenir une correspondance prescrite entre au moins la première dimension de la superposition et l'image capturée ;
l'appareil (10) permettant en outre de calculer une hauteur de la charge de toit (150) et de fournir une sortie correspondant à la hauteur calculée.

2. Appareil (10) selon la revendication 1, l'appareil permettant à l'utilisateur (5) de manipuler la superposition du véhicule (210) par translation, expansion et compression de celle-ci dans au moins deux directions non parallèles.

3. Appareil (10) selon la revendication 1 ou la revendication 2, l'appareil permettant d'afficher une superposition du véhicule (210) prédéterminée correspondant à la marque et au modèle du véhicule affiché dans l'image.

4. Appareil (10) selon la revendication 3 permettant de déterminer la marque et le modèle du véhicule (110) en se référant aux données de la marque et du modèle entrées par un utilisateur (5) ; ou à un identifiant unique du véhicule entré par un utilisateur comme un numéro de plaque d'immatriculation ou un numéro d'identification du véhicule (NIV) ; ou à un identifiant unique du véhicule déterminé par l'appareil à partir d'une image au moyen de la reconnaissance optique des caractères.

5. Appareil (10) selon l'une quelconque des revendications précédentes, dans lequel la superposition du véhicule (210) compose une image d'au moins une partie du véhicule, éventuellement une image en fil de fer.

6. Appareil (10) selon l'une quelconque des revendications précédentes, permettant à l'utilisateur (5) de fournir une indication d'une position d'une limite supérieure de la charge de toit (150) sur l'image affichée en demandant à l'utilisateur de positionner une superposition de la charge de toit (250) sur la partie de l'image correspondant à la charge de toit.

7. Appareil (10) selon la revendication 6, dans lequel la superposition de la charge de toit (250) comprend une image en fil de fer.

8. Appareil (10) selon l'une quelconque des revendications précédentes, l'appareil permettant de détecter automatiquement une position de la charge de toit (150) à partir de l'image capturée et/ou
l'appareil permettant à l'utilisateur de fournir une indication d'une position d'une limite supérieure de la charge de toit (150) sur l'image affichée.

9. Appareil (10) selon l'une quelconque des revendications précédentes permettant de demander à un utilisateur (5) d'activer un ou plusieurs moyens d'éclairage du véhicule.

10. Véhicule (110) doté de moyens informatiques qui communiquent avec un appareil (10) selon l'une quelconque des revendications précédentes, le véhicule permettant de recevoir des données correspondant à une hauteur d'une charge de toit (150) du véhicule provenant de l'appareil.

11. Procédé de détermination d'une hauteur d'une charge de toit (150) d'un véhicule (110) comprenant les étapes suivantes :
recevoir et afficher une image capturée d'au moins une partie du véhicule (110) sur le moyen d'affichage (12) d'un appareil informatique (10) ;
positionner une superposition du véhicule (210) sur l'image, la superposition du véhicule comprenant une image représentant un modèle virtuel du véhicule à partir d'un premier point de vue, au moins une première dimension de la superposition du véhicule correspondant à une dimension connue du véhicule (110) ; et
recevoir une entrée d'un utilisateur (5) et changer une apparence de la superposition du véhicule (210) en réponse à l'entrée de l'utilisateur, l'utilisateur manipulant ainsi la superposition pour composer une image qui représente le modèle virtuel du véhicule à partir d'un second point de vue, afin d'obtenir une correspondance prescrite entre au moins la première dimension de la superposition du véhicule et l'image capturée,
le procédé comprenant en outre le calcul d'une hauteur de la charge de toit (150) et la fourniture d'une sortie correspondant à la hauteur calculée.

12. Code de programme informatique conçu pour mettre en oeuvre le procédé selon la revendication 11 lorsqu'il est exécuté par un appareil informatique (10).

13. Support de stockage lisible par ordinateur stockant un code de programme informatique au moyen duquel un appareil informatique (10) peut mettre en oeuvre le procédé selon la revendication 11.
